Europäisches Patentamt

European Patent Office

Office européen des brevets

(11) Veröffentlichungsnummer: **0 492 197 A2**

# EUROPÄISCHE PATENTANMELDUNG

(21) Anmeldenummer: **91120815.5**

(22) Anmeldetag: **04.12.91**

(51) Int. Cl.5: **H01R 9/03**, H02G 15/10

(30) Priorität: **24.12.90 DE 4041781**

(43) Veröffentlichungstag der Anmeldung:
**01.07.92 Patentblatt 92/27**

(84) Benannte Vertragsstaaten:
**AT BE CH DE DK ES FR GB GR IT LI NL SE**

(71) Anmelder: **kabelmetal electro GmbH**
**Kabelkamp 20 Postfach 260**
**W-3000 Hannover 1(DE)**

(72) Erfinder: **Marx, Karl-Heinz, Dipl.-Ing.**
**Zehntweg 25**
**W-3008 Garbsen 9(DE)**

(54) **Abzweigmuffe für Niederspannungskabel.**

(57) Bei einer Abzweigmuffe für Niederspannungskabel, bestehend aus einer Kernklemme aus Metall, die aus zwei Hälften besteht, die mit Schraubbolzen zu der Kernklemme zusammenschraubbar sind, wobei beim Zusammenschrauben die Isolierung der Kabeladern von Kontaktkrallen durchdrungen wird, sowie einer äußeren Umhüllung zum Schutz gegen äußere Einflüsse, ist durch die zwei Hälften (3a,3b) der Kernklemme (3) in deren Trennflächenbereiche eine Kammer (24) gebildet, die mit einer dauerplastischen Masse ausgefüllt ist. Beim Zusammenschrauben der Hälften (3a,3b) verringert die Kammer (24) ihr Volumen, wodurch die Masse den Zwickelbereich abdichtet. Die Umhüllung besteht aus einer wärmegeschrumpften Manschette (8), deren Längskanten durch eine flexible Schiene (9) miteinander verbunden sind und deren Enden auf dem in die Muffe eintretenden Kabel (1) aufliegen.

EP 0 492 197 A2

Die Erfindung betrifft eine Abzweigmuffe für Niederspannungskabel, bestehend aus einer Kernklemme aus Metall, die aus zwei Hälften besteht, die mittels Schraubbolzen zu der Kernklemme zusammenschraubbar sind, wobei beim Zusammenschrauben die Isolierung der Kabeladern von Kontaktkrallen durchdrungen wird sowie einer äußeren Umhüllung zum Schutz gegen äußere Einflüsse.

Metallische Kernklemmen der eingangs erwähnten Art sind für die Herstellung von Abzweigstellen für mehradrige Niederspannungskabel bekannt. Die Kernklemmen besitzen an ihrer den Kontaktkrallen entgegengesetzten Seite eine Bohrung, durch welche das abisolierte Abzweigkabel hindurchgeführt und mit einer Madenschraube festgelegt wird (DE-AS 17 90 060). Zum Schutz gegen äußere Einflüsse wird die elektrische Abzweigstelle von einer Umhüllung umgeben, in die ein Zweikomponenten-Gießharz in flüssiger Form eingegossen wird, der aushärtet und dabei vernetzt. Aufgrund der geringen Viskosität dringt das noch flüssige Gießharz in den Zwickelbereich zwischen den Adern ein und dichtet diesen gegenüber sich in Längsrichtung des Kabels ausbreitendes Wasser ab. Diese Technik hat sich bereits über einen langen Zeitraum bewährt. Nachteilig ist jedoch, daß die Kabeladern werksseitig präpariert werden müssen, damit das erstarrte Gießharz Mit diesem dauerhaft verbunden bleibt. Ein weiterer Nachteil ist, daß das Gießharz an der Montagestelle aus zwei Komponenten hergestellt werden muß.

Überschüssiges Gießharz muß entsorgt werden. Eine Repartur der Muffe ist nicht möglich. Bei einer fehlerhaften Montage muß das Gehäuse zerstört und das ausgehärtete Gießharz entfernt werden.

Der vorliegenden Erfindung liegt von daher die Aufgabe zugrunde, die bekannte Muffe dahingehend zu verbessern, daß das Kontaktieren der isolierten Adern und das Abdichten in einem Arbeitsgang erfolgt. Darüberhinaus soll das Muffengehäuse schneller montierbar und auch von den Herstellungskosten preisgünstiger sein.

Diese Aufgabe wird dadurch gelöst, daß durch die zwei Hälften der Kernklemme, in deren Trennflächenbereiche eine Kammer gebildet ist, die mit einer dauerplastischen Masse ausgefüllt ist und beim Zusammenschrauben der Hälften ihr Volumen verringert und daß die Umhüllung aus einer wärmegeschrumpften Manschette besteht, deren Längskanten durch eine flexible Schiene miteinander verbunden sind und deren Enden auf den in die Muffe eintretenden Kabeln aufliegt. Durch die Verringerung des Kammervolumens wird die in der Kammer befindliche dauerplastische Masse in den Zwickelraum zwischen den einzelnen Kabeladern gepreßt und dichtet diesen ab. Die Masse sollte eine solche Konsistenz haben, daß sie sich bei einer Temperatur von ca. 15 ° C unter Druck leicht verpressen läßt, andererseits aber bei Temperaturen um 100 ° C standfest ist, d.h. nicht verläuft. Das Umhüllen der Verbindungsstelle mit einer wärmerückstellbaren Manschette ist an sich bei Nachrichtenkabelverbindungen bekannt.

Nach einer besonders vorteilhaften Weiterbildung der Erfindung ist vorgesehen, daß der zwischen dem Hauptkabel und dem Abzweigkabel befindliche Bereich abgedichtet ist. Dies kann beispielsweise durch Zusammendrücken des Endbereichs der Manschette zwischen den Kabeln, z.B. mittels einer Klammer, Klemme etc. geschehen.

Im Bereich der Kernklemme sind Keile zwischen den Adern des Hauptkabels angeordnet. Diese Keile spreizen die Adern auseinander und erleichtern somit das Einfließen der dauerplastischen Masse.

Die Kammer für die dauerplastische Masse ist durch ineinandergreifende Randbereiche der Klemmenhälften und durch jeweils eine Gummidichtung an der Ein- und Austrittsöffnung für das Hauptkabel gebildet. Dabei können die Randbereiche wie Nut und Feder ineinandergreifen.

Die Kernklemmenhälften sind von einem Hüll- oder Formkörper aus einem Kunststoff umgeben, durch dessen die Kernklemmenhälften überragende Randbereiche die Kammer gebildet ist. Diese Ausgestaltung ermöglicht es, daß die bisher verwendeten bewährten Kernklemmen unverändert bleiben und lediglich mit einer zusätzlichen äußeren Hülle versehen werden.

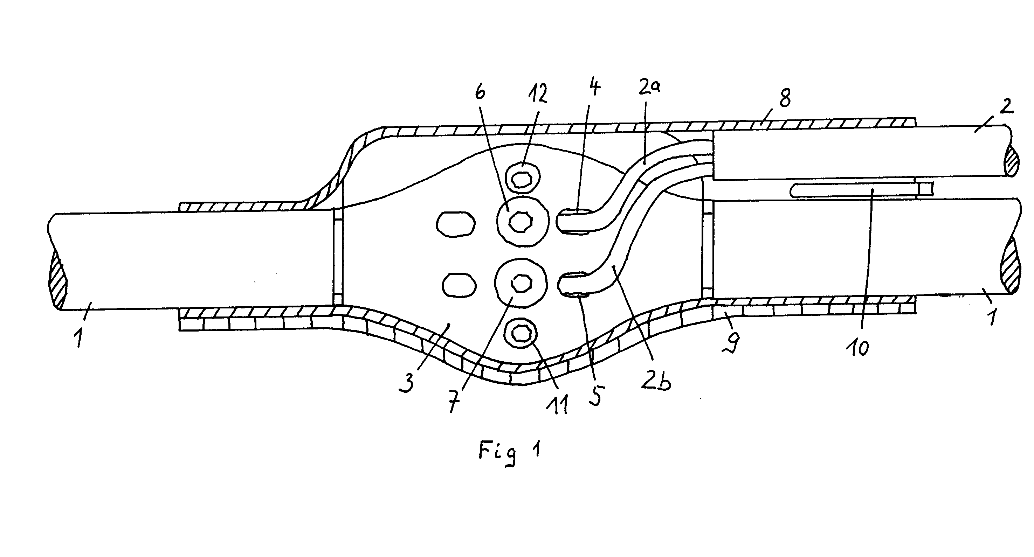

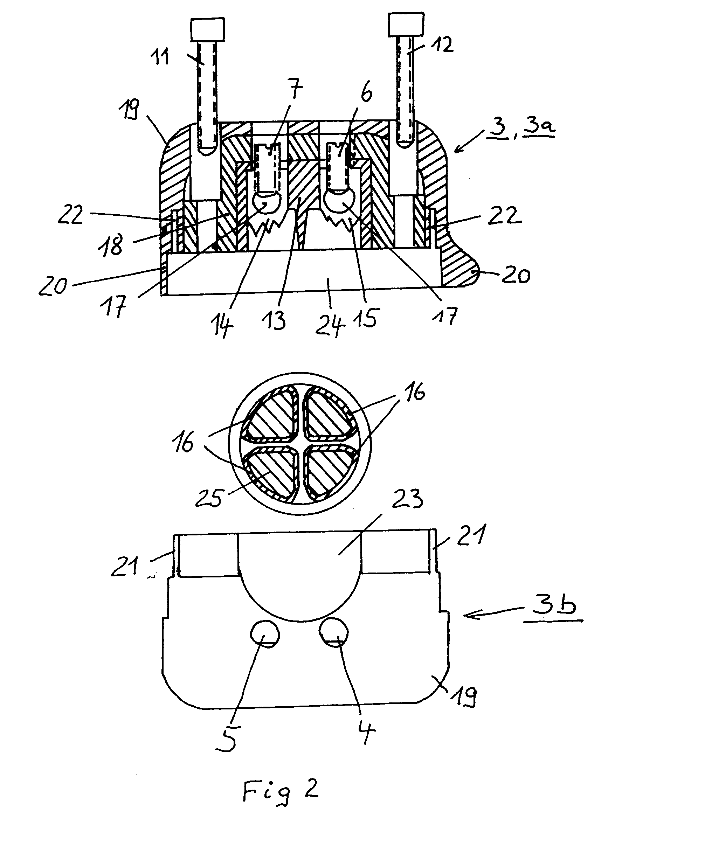

Die Erfindung ist anhand der in den Figuren 1 und 2 schematisch dargestellten Ausführungsbeispiele näher erläutert.

In der Figur 1 ist eine Ansicht einer Abzweigstelle eines Kabels - teilweise im Schnitt - dargestellt.

Bei dem Kabel 1 handelt es sich üblicherweise um ein 1KV-Kabel mit vier Adern. Das Abzweigkabel 2 weist ebenfalls vier Adern auf, die von den Adern des Hauptkabels 1 abzweigen. Hierzu dient eine sogenannte Kernklemme 3, die, wie weiter unten näher beschrieben, aus zwei Hälften besteht. Nach dem Entfernen des Kunststoffmantels des Hauptkabels 1 wird die Kernklemme auf das Hauptkabel 1 aufgesetzt und die Hälften zusammengeschraubt.

Beim Zusammenschrauben dringen Metallkrallen durch die Isolierschicht der Adern und kontaktieren die Leiter. Die Adern des Abzweigkabels 2, von denen nur die Adern 2a und 2b dargestellt sind, werden endseitig von ihrer Isolierschicht befreit und die Enden in die Öffnungen 4 und 5 eingeführt und mit den Madenschrauben 6 und 7 festgelegt. Die Öffnungen 4 und 5 münden im Bereich der Metallkrallen. Die Adern des Abzweigkabels 2 sind dadurch also mit den entsprechenden Adern des Hauptkabels 1 verbunden.

Die Abzweigstelle ist von einer wärmegeschrumpften Manschette 8 umgeben, die aus einem vernetzten Kunststoffband hergestellt ist. Die Manschette 8 wird um die Abzweigstelle herum zu einem Rohr geformt, an seinen Längskanten mit einer flexiblen Schiene 9 verbunden, mit einer weichen Flamme erwärmt und dabei geschrumpft. Die Manschette 8 ist, wie an sich bekannt, an ihrer nach innen weisenden Oberfläche mit einem Heißschmelzkleber beschichtet, der bei Schrumpftemperatur flüssig wird und verbliebene Hohlräume ausfüllt. Die Manschette 8 kann auch nur an ihren Enden mit Heißschmelzkleber beschichtet sein, während im mittleren Bereich eine plastische Dichtmasse vorgesehen ist. Zwischen dem Hauptkabel 1 und dem Abzweigkabel 2 ist die Manschette 8 durch eine Klemme 10 zusammengehalten, so daß nach dem Schrumpfen die Manschette 8 sich auf die Oberfläche des Hauptkabels 1 und des Abzweigkabels 2 auflegt. Der Bereich zwischen den beiden Kabeln 1 und 2 ist durch die Klemmen 10 und den Heizschmelzkleber abgedichtet. Auf der gegenüberliegenden Seite liegt die Manschette 8 ganzflächig auf dem Mantel des Hauptkabels 1 auf und ist mittels des Heißschmelzklebers mit diesem verklebt. Die äußere Kontur der Kernklemme 3 ist dem Schrumpfprozeß angepaßt, d.h. die Kanten sind abgerundet und große Durchmessersprünge sind vermieden.

Die Figur 2 zeigt die Kernklemme 3 zum Teil in der Ansicht, zum Teil im Schnitt.

Es ist deutlich erkennbar, daß die Kernklemme 3 aus den zwei Hälften 3a und 3b besteht, die mittels der Schraubbolzen, die in nicht näher dargestellte Gewindebohrungen in der Hälfte 3b eindringen, zusammengeschraubt werden. In jeder der Hälften 3a und 3b ist eine Brücke 13 aus einem Isolierwerkstoff vorgesehen, in welcher zwei Metallkrallen 14 und 15 vorgesehen sind, die beim Zusammenschrauben der Hälften 3a und 3b die Isolierschicht 16 der Adern des Hauptkabels 1 durchdringen. In den Metallkrallen 14 und 15 sind Bohrungen 17 für die Abzweigadern 2a und 2b vorgesehen, welche durch die Madenschrauben 6 und 7 festgelegt werden.

Das die Brücke 13 umgebende Gehäuse 18 besteht aus mechanischen Gründen aus Metall, vorzugsweise Aluminium. Solche Kernklemmen sind bekannt.

Jede der Hälften 3a und 3b weist eine Kunststoffhülle 19 auf, die mechanisch fest mit dem Gehäuse 18 verbunden ist. Für das Material der Hülle 19 sollte ein harter Kunststoff, wie z. B. Polycarbonat verwendet werden. Die Hülle 19 überragt das Gehäuse 18 in der Weise, daß bei der Hälfte 3a ein Rand 20 und bei der Hälfte 3b ein Steg 21 übersteht. Beim Zusammenschrauben der Hälften 3a und 3b dringt der Steg 21 in eine Nut 22 ein. In dem Ausbruch 23 befindet sich eine nicht dargestellte Gummidichtung. Durch den Rand 20, den Steg 21, die Nut 22 sowie die in beiden Ausbrüchen 23 vorgesehenen Gummidichtungen wird eine Kammer 24 geschaffen, deren Volumen sich beim Zusammenschrauben der Hälften 3a und 3b verkleinert. Die Kammer 24 ist mit einer dauerplastischen Masse gefüllt, die bei Umgebungstemperatur von ca. 15 ° C gut verpreßbar ist und bei 100 ° C noch eine ausreichende Standfestigkeit aufweist. Solche Massen sind unter dem Namen Kaltpressmasse bekannt. Auch eine Masse auf der Basis von Petroleumjelly ist geeignet.

Die Masse wird durch den sich in der Kammer 24 beim Zusammenschrauben der Hälften 3a und 3b aufbauenden Druck zwischen die Adern 25 des Hauptkabels 1 gepreßt und verteilt sich auch in Längsrichtung des Kabels 1. Die Adern 25 des Kabels 1 sind, um den Vorgang des Einpressens zu erleichtern, im Bereich der Kernklemme 3 etwas gespreizt. Die Masse dringt auch in die Bohrungen 17 ein und tritt zum Teil aus den Öffnungen 4 und 5 aus. Auf diese Weise ist die Abzweigmuffe nach außen gegen den Eintritt von Feuchtigkeit allseitig abgedichtet.

**Patentansprüche**

1.  Abzweigmuffe für Niederspannungskabel, bestehend aus einer Kernklemme aus Metall, die aus zwei Hälften besteht, die mit Schraubbolzen zu der Kernklemme zusammenschraubbar sind, wobei beim Zusammenschrauben die Isolierung der Kabeladern von Kontaktkrallen durchdrungen wird, sowie einer äußeren Umhüllung zum Schutz gegen äußere Einflüsse, dadurch gekennzeichnet, daß durch die zwei Hälften (3a,3b) der Kernklemme (3) in deren Trennflächenbereiche eine Kammer (24) gebildet ist, die mit einer dauerplastischen Masse ausgefüllt ist und beim Zusammenschrauben der Hälften (3a,3b) ihr Volumen verringert und daß die Umhüllung aus einer wärmegeschrumpften Manschette (8) besteht, deren Längskanten durch eine flexible Schiene (9) miteinander verbunden sind und deren Enden auf dem in die Muffe eintretenden Kabel (1) aufliegen.

2.  Abzweigmuffe nach Anspruch 1, dadurch gekennzeichnet, daß der zwischen dem Hauptkabel (1) und dem Abzweigkabel (2) befindliche Bereich abgedichtet ist.

3.  Abzweigmuffe nach Anspruch 1 oder 2, dadurch gekennzeichnet, daß im Bereich der Kernklemme (3) Keile zwischen den Adern des Hauptkabels angeordnet sind.

4. Abzweigmuffe nach einem der Ansprüche 1 bis 3, dadurch gekennzeichnet, daß die Kammer (24) durch ineinandergreifende Randbereiche der Hälften (3a,3b) und durch jeweils eine Gummidichtung an der Ein- und Austrittsöffnung für das Hauptkabel (1) gebildet ist.

5. Abzweigmuffe nach einem der Ansprüche 1 bis 4, dadurch gekennzeichnet, daß die Kernklemmenhälften (3a,3b) von einem Hüll- oder Formkörper (19) aus einem Kunststoff umgeben sind, durch dessen die Kernklemmenhälften (3a,3b) überragende Randbereiche (20,21) die Kammer (24) gebildet ist.

Fig 1

Fig 2